# EUROPÄISCHE PATENTSCHRIFT

(11) **EP 4 420 857 B1**
(45) Veröffentlichungstag und Bekanntmachung des Hinweises auf die Patenterteilung: **23.04.2025**
(21) Anmeldenummer: 23175037.3
(22) Anmeldetag: 24.05.2023
(51) Int. Cl.: B29C 48/25, F16D 1/033, F16D 9/08

(54) **KUPPLUNGSELEMENT FÜR EINEN EXTRUDER**
COUPLING ELEMENT FOR AN EXTRUDER
ÉLÉMENT DE COUPLAGE POUR UNE EXTRUDEUSE

(43) Veröffentlichungstag der Anmeldung: 28.08.2024
(73) Patentinhaber: Flender GmbH, 46395 Bocholt (DE)
(72) Erfinder: STEGGEMANN, Dirk, 46395 Bocholt (DE); SONDERMANN, Niklas, 46395 Bocholt (DE)
(74) Vertreter: Michalski Hüttermann & Partner Patentanwälte mbB

(56) Entgegenhaltungen:
- EP-A1- 3 378 624
- EP-A2- 2 179 834
- WO-A1-2010/109486
- WO-A1-2020/169927
- DE-U1- 202019 106 047
- US-A1- 2009 253 521

## Beschreibung

Die Erfindung betrifft ein Kupplungselement zur Verbindung jeweils einer Extruderschnecke mit einer Antriebseinheit eines Doppelschneckenextruders, mit zwei in einen Verbindungsbereich miteinander verbundenen Aufnahmebuchsen, wobei die erste Aufnahmebuchse zur Aufnahme eines Wellenendes der Antriebseinheit und die zweite Aufnahmebuchse zur Aufnahme eines der Extruderschnecken vorgesehen ist.

Extruderanlagen dienen zur Durchmischung, Förderung und Verdichtung verschiedener Materialien. In der Regel werden die Materialien dabei erhitzt. Dieser Vorgang wird über eine oder zwei rotierende und parallel zueinander angeordnete Extruderschnecken realisiert. Folglich unterscheidet man zwischen Einschnecken- und Doppelschneckenextrudern. Bei Doppelschneckenextrudern wird im Getriebe das Prinzip der Leistungsverzweigung genutzt und das erzeugte Motordrehmoment auf zwei Abtriebswellen aufgeteilt. Im Idealfall ist dabei die Größe der Abtriebsdrehmomente beider Wellen identisch. Die Abtriebswellen des Getriebes treiben dann die zwei Extruderschnecken an. Es gibt Extruderanlagen mit gleichsinnig drehenden und mit gegensinnig drehenden Schnecken. Zudem sind i.d.R. die Verdrehwinkel der beiden Schnecken zueinander synchronisiert.

Störungen des Regelbetriebs, hervorgerufen beispielsweise durch Verunreinigungen oder sonstige Inhomogenitäten im Ausgangsmaterial oder erkaltete Materialrückstände eines früheren Extrusionsvorgangs, können zu einer ungleichförmigen Lastverteilung des Drehmoments auf die Abtriebswellen führen. System- bzw. prozessbedingt haben die Extruderschnecken einen definierten Achsabstand zueinander, der den Außendurchmesser der Getriebeabtriebswellen limitiert. Dementsprechend hoch ist die Drehmomentdichte in diesen Teilen bereits bei Nennlast. Kommen nun Lastspitzen durch zuvor erwähnte Effekte hinzu, kann die Überlastung einzelner Komponenten die Folge sein. Es besteht folglich ein ständiges Bedürfnis die Komponenten einer Extruderanlage während des Regelbetriebes vor einer Überlastung zu schützen.

Die EP 2939943 A1 zeigt eine elektronische Regelung zum Schutz einer Anlage vor einer Überlastung. Das Drehmoment wird messtechnisch an den Getriebeabtriebswellen erfasst. Wird ein Drehmomentgrenzwert, ein Gradientengrenzwert des Drehmoments oder eine unzulässig hohe Schwingung detektiert, so öffnet eine schaltbare Kupplung zwischen Motor und Getriebe und die Drehzahl des Motors wird über einen Frequenzumrichter runtergeregelt. In der EP 3 378 624 A1 ist eine Sicherheitskupplung beschrieben, die zwei Kupplungshälften aufweist, zwischen denen Scherstifte angeordnet. Bei einer Überlastung bilden die Scherstifte eine Sollbruchstelle, scheren ab und unterbrechen hierüber das übertragene Drehmoment. Die Scherstifte können ersetzt werden und die Sicherheitskupplung ist erneut funktionstüchtig. Die Sicherheitskupplung erfordert allerdings einen bestimmten radialen Bauraum, der insbesondere bei Doppelschneckenextrudern infolge des definierten Achsabstandes zueinander regelmäßig nicht gegeben ist. Die WO 2010/109486 A1 zeigt eine Kupplung zum Koppeln einer Extruderschneckenwelle mit der Ausgangswelle einer Antriebseinrichtung. Die Kupplung und ein Adapter sind so konfiguriert, dass sie mit der Ausgangswelle der Antriebseinrichtung in Eingriff kommen, wobei der Adapter einen vorgeschwächten Bereich definiert, der so ausgelegt ist, dass er bei einem Drehmoment, der kleiner als ein kritisches Drehmoment der Extruderschneckenwelle ist, bricht. Die EP 2 179 834 A2 zeigt für einen Doppelextruder eine Kupplungshülse, die mit einen Dehnungsmessstreifen versehen ist. Die US 2009/0253521 A1 zeigt eine Wellenanordnung für eine Kraftfahrzeug, die eine erste Welle mit einem ersten Verbindungsende und eine zweite Welle mit einem zweiten Verbindungsende aufweist. Ein Verbindungsrohr mit einem Scherdurchmesser steht in jeweiligem Eingriff mit dem ersten Verbindungsende und dem zweiten Verbindungsende. Der Scherdurchmesser ist so konfiguriert, dass er bei einem Überlastmoment einen Scherbruch erfährt.

Es ist die Aufgabe der Erfindung Maßnahmen aufzuzeigen, mit denen ein Kupplungselement für einen Doppelschneckenextruders unter Berücksichtigung des eingeschränkten Achsabstandes bereitgestellt werden kann.

Die Lösung der Aufgabe erfolgt durch ein Kupplungselement mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Kupplungselement zur Verbindung jeweils einer Extruderschnecke mit einer Antriebseinheit eines Doppelschneckenextruders, mit zwei in einen Verbindungsbereich miteinander verbundenen Aufnahmebuchsen, wobei die erste Aufnahmebuchse zur Aufnahme eines Wellenendes der Antriebseinheit und die zweite Aufnahmebuchse zur Aufnahme eines der Extruderschnecken vorgesehen ist. Der Verbindungsbereich weist eine Mehrzahl umfänglich verteilte und radial verlaufende Bohrungen oder eine umfänglich verlaufende Schweißnaht auf, wobei der Verbindungsbereich über die Bohrungen oder die Schweißnaht über ein reduziertes Bruchmoment bei einer Torsionsbelastung gegenüber einem angrenzenden Strukturbereich der Aufnahmebuchsen verfügt.

Die Aufnahmebuchsen sind koaxial zueinander angeordnet und bevorzugt zylindrisch ausgeführt und weisen auf einer Innenfläche eine Profilierung zur Drehmomentübertragung zwischen der Aufnahmebuchse und der Antriebseinheit einerseits und der Extruderschnecke andererseits auf.

Die Antriebseinheit kann einen Antriebsmotor und eine Übersetzungsstufe bzw. ein Getriebe umfassen. Üblicherweise erfolgt die Leistungsverzweigung über ein Getriebe. Vor dem Getriebe kann auch ein Riementrieb zwischen Motor und Getriebe geschaltet sein, um eine größere Übersetzung zu realisieren. Über die Antriebseinheit kann das bereitgestellte Drehmoment auf beide Extruderschnecken verteilt bzw. verzweigt werden. Bevorzugt ist, wenn das Drehmoment zu gleichen Anteilen auf die Extruderschnecken verteilt wird. Jedes Wellenende der Antriebseinheit ist eine jeweiligen Ausgangwelle der Antriebseinheit zugeordnet.

Der Verbindungsbereich bildet den Übergang zwischen den beiden Aufnahmebuchsen. Die beiden Aufnahmebuchsen sind infolge des Verbindungbereichs als ein Bauteil, d.h. einstückig, ausgeführt. Hiervon unberührt ist, dass die beiden Aufnahmebuchse zu einem Zeitpunkt während des Fertigungsprozesses als zwei separate und voneinander getrennte Werkstücke vorliegenden können. Der Verbindungsbereich kann im Allgemeinen das gleiche Material wie der benachbarte Strukturbereich der Aufnahmebuchsen umfassen, wie beispielsweise bei der Ausführungsform mit der Mehrzahl umfänglich verteilter und radial verlaufender Bohrungen. Bei der Ausführungsform mit der umfänglich verlaufenden Schweißnaht kann der Verbindungsbereich außerdem das Material der Schweißnaht umfassen.

Die Torsionsbelastung ergibt sich während eines Regelbetriebs des Doppelschneckenextruders infolge des von der Antriebseinheit aufgebrachten Antriebsmoments einerseits und des von den Extruderschnecken entgegengesetzten Widerstandes infolge des zu bearbeitenden Extrudiergutes andererseits.

Die Ausführungsformen des Kupplungselements entweder mit den umfänglich verteilten und radial verlaufenden Bohrungen oder der umfänglich verlaufenden Schweißnaht bilden eine Sollbruchstelle aus, die bei Überlast versagt und so die übrigen Anlagenkomponenten schützt. Es ist jedoch kein zusätzliches Scherelement, z.B. Scherstifte, eingesetzt, sondern das Kupplungselement selbst weist einen geschwächten Bereich auf. Dieser Bereich ist so ausgeführt, dass er mit möglichst kleinen Anpassungen so verändert werden kann, dass mit Hilfe von Berechnungen ein definiertes Bruchmoment erreicht werden kann.

Die Ausführungsformen des Kupplungselements entweder mit den umfänglich verteilten und radial verlaufenden Bohrungen oder der umfänglich verlaufenden Schweißnaht ermöglichen eine noch kompaktere Bauweise, als es die herkömmlichen Konstruktionen erlauben. Insbesondere ist verglichen mit den herkömmlichen Konstruktionen kein zusätzlicher axialer Bauraum erforderlich. Mit dem Kupplungselement können auch bestehende Anlagen nachgerüstet werden, da der benötigte Einbauraum und die Anschlussmaße identisch gewählt werden können.

In einer bevorzugten Ausgestaltung bildet der Verbindungsbereich infolge der Bohrungen oder der Schweißnaht einen reduzierten Querschnitt gegenüber dem angrenzenden Strukturbereich aus. Es wird hiermit eine Sollbruchstelle in den Verbindungsbereich eingefügt. Insbesondere kann vorgesehen sein, dass der Verbindungsbereich über den Bohrungsdurchmesser und den umfänglichen Abstand der Bohrungen zueinander und/oder den Innendurchmesser und den Außendurchmesser, insbesondere der Schweißnaht, bezüglich des zu erzielenden Bruchmoments ausgelegt ist.

Bei der Ausführungsform mit den umfänglich verteilten und radial verlaufenden Bohrungen ist bevorzugt vorgesehen, dass der umfängliche Abstand zwischen den Bohrungen höchstens das 1,5-fache, insbesondere höchstens das 1,2-fache, des Bohrungsdurchmessers beträgt. Hierdurch ist gewährleitet, dass ein definierter Rissverlauf in der Bruchebene entsteht, da die Torsionsschubspannungen unter einem Winkel von 45° wirken.

Die Aufgabe wird zudem gelöst durch einen Doppelschneckenextruder mit einer Antriebseinheit und zwei von der Antriebseinheit leistungsverzweigt angetriebene Extruderschnecken, dadurch gekennzeichnet, dass die Antriebseinheit mit den Extruderschnecken über jeweils ein Kupplungselement nach einem der vorangegangenen Ansprüche verbunden ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Figur 1: eine perspektivische und teilweise explodierte Darstellung eines Doppelschneckenextruders;
Figuren 2a), 2b): eine perspektivische und eine geschnittene Darstellung eines Kupplungselements in einer ersten Ausführung und
Figuren 3a), 3b): eine perspektivische und eine geschnittene Darstellung eines Kupplungselements in einer zweiten Ausführung.

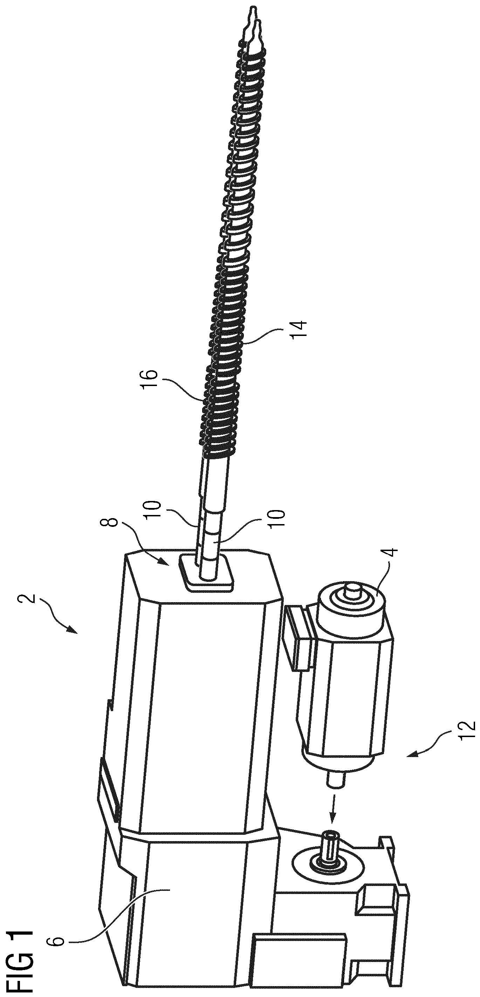

Die Figur 1 zeigt in perspektivischer und teilweise explodierter Darstellung einen Doppelschneckenextruder 2. Der Doppelschneckenextruder 2 umfasst strukturell eine Antriebseinheit 12, die sich vorliegend aus einer Motoreinheit 4 und einer Getriebeeinheit 6 zusammensetzt. Die Getriebeeinheit 6 kann das Antriebsmoment der Motoreinheit 4 leistungsverzweigt an zwei parallel zueinander angeordnete Ausgangswellen 8 übertragen werden kann. Mit den beiden Ausgangswellen 8 sind jeweils über ein Kupplungselement 10 eine erste und eine zweite Extrusionsschnecke 14, 16 verbunden. Die beiden Extrusionsschnecken 14, 16 weisen, entsprechend den Ausgangswellen 8, einen geringen Achsabstand zueinander auf. Weitere Bestandteile der Anlage können Zylinder, Befülltrichter, Heizbänder, Düsen und ein Maschinengestell sein, was allerdings nicht abgebildet ist.

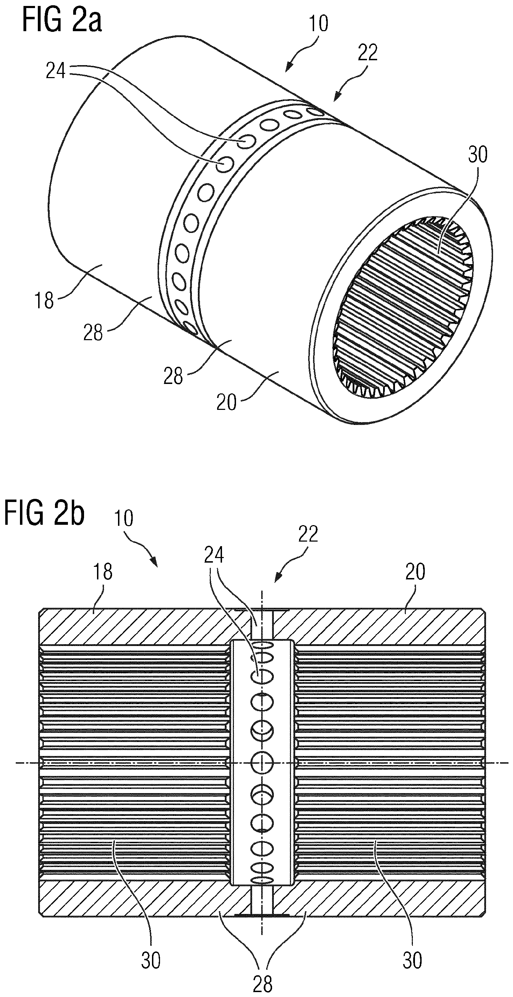

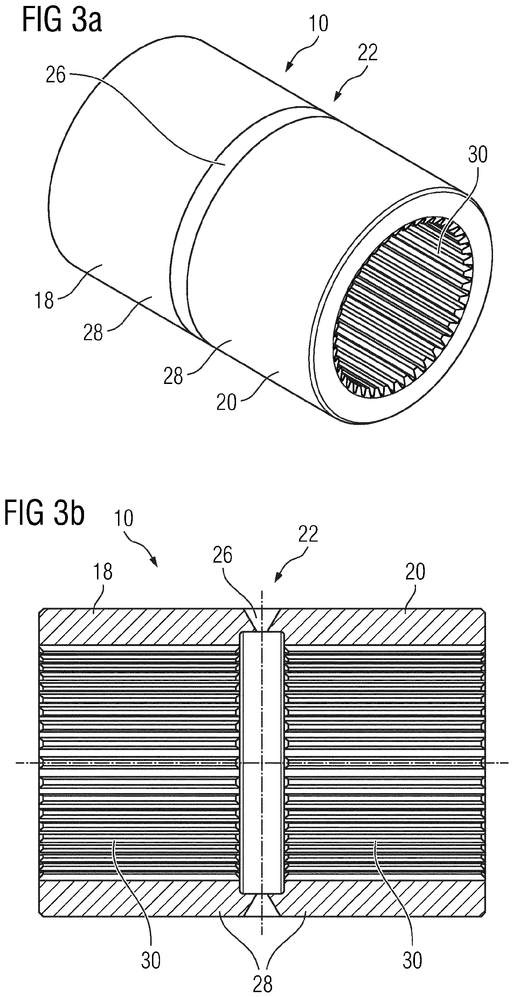

Die Figuren 2 und 3 zeigen, jeweils in einer perspektivischen und einer geschnittenen Darstellung a) und b), zwei Ausführungsformen eines erfindungsgemäßen Kupplungselements 10.

Das Kupplungselement 10 umfasst in jeder Ausführungsform zwei Aufnahmebuchsen 18, 20, die in einem Verbindungsbereich 22 miteinander verbunden sind. Die beiden Aufnahmebuchsen 18, 20 sind bevorzugt identisch ausgeführt und über den Verbindungsbereich 22 konzentrisch aneinander gesetzt und miteinander verbunden. Die erste Aufnahmebuchse 18 ist zur Aufnahme eines Wellenendes der Antriebseinheit 12 und die zweite Aufnahmebuchse 20 zur Aufnahme eines der Extruderschnecken 14, 16 vorgesehen. Ein Innenumfang jeder der Aufnahmebuchse 18, 20 bildet vorliegend eine Längsverzahnung aus, die mit einer korrespondierenden Längsverzahnung 30 der Antriebswellen der Antriebseinheit 12 und der Extruderschnecke 14, 16 eine formschlüssige Verbindung zur Drehmomentübertragung eingehen kann. Der Verbindungsbereich 22 verfügt über eine Mehrzahl umfänglich verteilter und radial verlaufender Bohrungen 24 - siehe Figuren 2a) und 2b) -oder über eine umfänglich verlaufende Schweißnaht 26 - siehe Figuren 3a) und 3b). Der Verbindungsbereich verfügt in jedem Fall bei einer Torsionsbelastung über ein reduziertes Bruchmoment gegenüber einem angrenzenden Strukturbereich 28 der Aufnahmebuchsen 18, 20.

In den Querschnittsdarstellungen der Figuren 2b) und 3b) ist zu erkennen, dass der Verbindungsbereich 22 infolge der Bohrungen 24 oder der Schweißnaht 26 einen reduzierten Querschnitt gegenüber dem angrenzenden Strukturbereich 28 ausbildet. Der Verbindungsbereich 22 ist über den Bohrungsdurchmesser und den umfänglichen Abstand der Bohrungen 24 zueinander und den Innendurchmesser und den Außendurchmesser der Schweißnaht 26 bezüglich des zu erzielenden Bruchmoments ausgelegt. Bevorzugt ist, wie vorliegend dargestellt, dass ein radiales Maß des Verbindungsbereichs ein radiales Maß der miteinander verbundenen Aufnahmebuchsen nicht übersteigt. Der umfängliche Abstand zwischen den Bohrungen 24 beträgt bevorzugt höchstens das 1,5-fache, insbesondere höchstens das 1,2-fache, des Bohrungsdurchmessers.

### Bezugszeichenliste

- 2: Doppelschneckenextruder
- 4: Motoreinheit
- 6: Getriebeeinheit
- 8: Ausgangswelle
- 10: Kupplungselement
- 12: Antriebseinheit
- 14: Extruderschnecke
- 16: Extruderschnecke
- 18: Aufnahmebuchse
- 20: Aufnahmebuchse
- 22: Verbindungsbereich
- 24: Bohrung
- 26: Schweißnaht
- 28: Strukturbereich
- 30: Längsverzahnung

## Patentansprüche

1. Kupplungselement (10) zur Verbindung jeweils einer Extruderschnecke (14, 16) mit einer Antriebseinheit (12) eines Doppelschneckenextruders (2), umfassend zwei in einen Verbindungsbereich (22) miteinander verbundene Aufnahmebuchsen (18, 20), wobei die erste Aufnahmebuchse (18) zur Aufnahme eines Wellenendes der Antriebseinheit (12) und die zweite Aufnahmebuchse (20) zur Aufnahme einer der Extruderschnecken (14, 16) vorgesehen ist,
**dadurch gekennzeichnet,**
**dass** der Verbindungsbereich (22) eine Mehrzahl umfänglich verteilte und radial verlaufende Bohrungen (24) oder eine umfänglich verlaufende Schweißnaht (26) aufweist, wobei der Verbindungsbereich (22) über die Bohrungen (24) oder die Schweißnaht (26) über ein reduziertes Bruchmoment bei einer Torsionsbelastung gegenüber einem angrenzenden Strukturbereich (28) der Aufnahmebuchsen (18, 20) verfügt.

2. Kupplungselement (10) nach Anspruch 1, **dadurch gekennzeichnet, dass** der Verbindungsbereich (22) infolge der Bohrungen (24) oder der Schweißnaht (26) einen reduzierten Querschnitt gegenüber dem angrenzenden Strukturbereich (28) ausbildet.

3. Kupplungselement (10) nach Anspruch 1 oder 2, **dadurch gekennzeichnet, dass** der Verbindungsbereich (22) über den Bohrungsdurchmesser und den umfänglichen Abstand der Bohrungen (24) zueinander und/oder den Innendurchmesser und den Außendurchmesser, insbesondere des Schweißnahts, bezüglich des zu erzielenden Bruchmoments ausgelegt ist.

4. Kupplungselement (10) nach einem der Ansprüche 1 bis 3, **dadurch gekennzeichnet, dass** das Bruchmoment in einem Bereich zwischen 11.000 Nm und 14.000 Nm liegt.

5. Kupplungselement (10) nach einem der Ansprüche 1 bis 4, **dadurch gekennzeichnet, dass** der umfängliche Abstand zwischen den Bohrungen (24) höchstens das 1,5-fache, insbesondere höchstens das 1,2-fache, des Bohrungsdurchmessers beträgt.

6. Kupplungselement (10) nach einem der Ansprüche 1 bis 5, **dadurch gekennzeichnet, dass** ein radiales Maß des Verbindungsbereichs (22) ein radiales Maß der miteinander verbundenen Aufnahmebuchsen (18, 20) nicht übersteigt.

7. Doppelschneckenextruder (2) mit einer Antriebseinheit (12) und zwei von der Antriebseinheit (12) leistungsverzweigt angetriebene Extruderschnecken (14, 16), **dadurch gekennzeichnet, dass** die Antriebseinheit mit den Extruderschnecken (14, 16) über jeweils ein Kupplungselement (10) nach einem der vorangegangenen Ansprüche verbunden ist.

## Claims

1. Coupling element (10) for connecting in each case one extruder screw (14, 16) to a drive unit (12) of a twin screw extruder (2), comprising two receptacle bushings (18, 20) connected to one another in a connecting region (22), wherein the first receptacle bushing (18) is provided for receiving a shaft end of the drive unit (12) and the second receptacle bushing (20) is provided for receiving one of the extruder screws (14, 16),
**characterized in that**
the connection region (22) has a plurality of circumferentially distributed and radially extending bores (24) or a circumferentially extending weld seam (26), wherein the connection region (22) by way of the bores (24) or the weld seam (26) possesses a reduced breaking moment at a torsional load in comparison to an adjacent structural region (28) of the receptacle bushings (18, 20).

2. Coupling element (10) according to Claim 1, **characterized in that**, due to the bores (24) or the weld seam (26), the connecting region (22) forms a reduced cross section in comparison to the adjacent structural region (28).

3. Coupling element (10) according to Claim 1 or 2, **characterized in that** the connecting region (22) is conceived in terms of the breaking moment to be achieved by way of the bore diameter and the circumferential mutual spacing of the bores (24) and/or the internal diameter and the external diameter, in particular of the weld seam.

4. Coupling element (10) according to one of Claims 1 to 3, **characterized in that** the breaking moment is in a range between 11,000 Nm and 14,000 Nm.

5. Coupling element (10) according to one of Claims 1 to 4, **characterized in that** the circumferential spacing between the bores (24) is at most 1.5 times, in particular at most 1.2 times, the bore diameter.

6. Coupling element (10) according to one of Claims 1 to 5, **characterized in that** a radial dimension of the connecting region (22) does not exceed a radial dimension of the interconnected receptacle bushes (18, 20).

7. Twin-screw extruder (2) having a drive unit (12) and two extruder screws (14, 16) driven by the drive unit (12) in a power-branched manner, **characterized in that** the drive unit is connected to the extruder screws (14, 16) by way of in each case one coupling element (10) according to one of the preceding claims.

## Revendications

1. Élément d'accouplement (10) pour relier respectivement une vis d'extrudeuse (14, 16) à une unité d'entraînement (12) d'une extrudeuse à deux vis (2), comprenant deux douilles de réception (18, 20) reliées entre elles dans une zone de liaison (22), la première douille de réception (18) étant prévue pour recevoir une extrémité d'arbre de l'unité d'entraînement (12) et la deuxième douille de réception (20) étant prévue pour recevoir l'une des vis d'extrudeuse (14, 16),
**caractérisé en ce que**
la zone de liaison (22) présente une pluralité d'alésages (24) répartis sur la circonférence et s'étendant radialement ou un cordon de soudure (26) s'étendant sur la circonférence, la zone de liaison (22) disposant, par l'intermédiaire des alésages (24) ou du cordon de soudure (26), d'un moment de rupture réduit lors d'une charge de torsion par rapport à une zone structurelle adjacente (28) des douilles de réception (18, 20).

2. Élément d'accouplement (10) selon la revendication 1, **caractérisé en ce que** la zone de liaison (22) réalise une section transversale réduite par rapport à la zone structurelle adjacente (28) en raison des alésages (24) ou du cordon de soudure (26).

3. Élément d'accouplement (10) selon la revendication 1 ou 2, **caractérisé en ce que** la zone de liaison (22) est conçue par rapport au couple de rupture à obtenir par le biais du diamètre d'alésage et de la distance circonférentielle des alésages (24) entre eux et/ou du diamètre intérieur et du diamètre extérieur, notamment du cordon de soudure.

4. Élément d'accouplement (10) selon l'une quelconque des revendications 1 à 3, **caractérisé en ce que** le moment de rupture se situe dans une plage comprise entre 11 000 Nm et 14 000 Nm.

5. Élément d'accouplement (10) selon l'une quelconque des revendications 1 à 4, **caractérisé en ce que** la distance circonférentielle entre les alésages (24) est d'au plus 1,5 fois, notamment d'au plus 1,2 fois, le diamètre d'alésage.

6. Élément d'accouplement (10) selon l'une quelconque des revendications 1 à 5, **caractérisé en ce qu'**une dimension radiale de la zone de liaison (22) ne dépasse pas une dimension radiale des douilles de réception (18, 20) reliées entre elles.

7. Extrudeuse à deux vis (2) avec une unité d'entraînement (12) et deux vis d'extrudeuse (14, 16) entraînées en répartition de puissance par l'unité d'entraînement (12), **caractérisée en ce que** l'unité d'entraînement est reliée aux vis d'extrudeuse (14, 16) par l'intermédiaire d'un élément d'accouplement (10) respectif selon l'une quelconque des revendications précédentes.
